Europäisches Patentamt

European Patent Office

Office européen des brevets

(11) Veröffentlichungsnummer: **0 022 463**
A1

## (12) EUROPÄISCHE PATENTANMELDUNG

(21) Anmeldenummer: 80102781.4

(22) Anmeldetag: 20.05.80

(51) Int. Cl.³: **B 01 D 37/02**

(30) Priorität: 07.06.79 DE 2923010

(71) Anmelder: **Hoval Interlit AG., Austrasse 70, FL-9490 Vaduz-Neugut (LI)**

(43) Veroffentlichungstag der Anmeldung: 21.01.81
Patentblatt 81/3

(72) Erfinder: **Zdansky, Ewald, Pradafant 11, FL-9490 Vaduz (LI)**

(74) Vertreter: **Louis, Walter, Dipl.-Ing. et al, Patentanwälte Dipl.-Ing. Walter Louis Dipl.-Ing. Günter Louis Stubertal 3, D-4300 Essen 1 (DE)**

(84) Benannte Vertragsstaaten: **AT BE CH FR GB IT LI LU NL SE**

(54) Anschwemm-Filtriervorrichtung zum Filtrieren von trüben Flüssigkeiten und Filtrierverfahren mit einer solchen Vorrichtung.

(57) Die Anschwemm-Filtriervorrichtung hat in einem senkrechten Behälter (10) ein Filterpaket (15) aus parallelen senkrechten, plattenförmigen Filterelementen. Das an den vier senkrechten Paketseiten geschlossene Filterpaket ist am oberen Rand durch einen Zwischendeckel (22) und am unteren Rand durch einen Zwischenboden (17) dicht mit dem Behälter verbunden. Zwischen dem Zwischendeckel und dem Zwischenboden ist das Filterpaket von dem Filtratraum (A) umgeben. Die Zwischenräume zwischen den Filterelementen bilden den Trüberaum (B) und sind zur Unterseite des Filterpaketes offen. Durch die zum Trüberaum offenen senkrechten Randflächen der Filterelemente tritt filtrierte Flüssigkeit in den Filtratraum aus. Unter dem Filterpaket hat der Behälter einen flachen Behälterboden (11) mit einer quadratischen Bodenöffnung (12), deren Querschnitt dem Gesamtquerschnitt des Filterpaketes entspricht und durch eine entsprechend große Bodenklappe (13) dicht verschließbar ist. Die im Trüberaum auf den Filterelementen sich bildenden Filterkuchen werden bei geöffneter Bodenklappe vorzugsweise durch einen Druckluftstoß aus einem mit dem Filtratraum verbundenen Druckluftvorratsbehälter von den Filterelementen gelöst und paarweise gegeneinander abgestoßen und fallen in dem Trüberaum frei nach unten und durch die Bodenöffnung aus dem Behälter heraus.

- .1 -

Anschwemmm-Filtriervorrichtung zum Filtrieren von trüben Flüssigkeiten und Filtrierverfahren mit einer solchen Vorrichtung

Die Erfindung betrifft eine Anschwemm-Filtriervorrichtung der im Oberbegriff des Hauptanspruchs angegebenen Gattung sowie die Durchführung eines Filtrierverfahrens mit einer solchen Anschwemm-Filtriervorrichtung.

Bei den zum Filtrieren von trüben Flüssigkeiten angewendeten bekannten Anschwemm-Filtriervorrichtungen sind in dem in der Regel zylindrischen und senkrechten Filterbehälter, der meist einen konisch auslaufenden Boden mit einer verschließbaren Öffnung hat, einzelne senkrechte Filterelementplatten angeordnet, die in der Regel aus einem groberen Kerngewebe und einem beidseitigen feinmaschigeren Deckgewebe bestehen und an allen vier Seiten von einem Rohrrahmen eingeschlossen sind, der an seiner unteren Seite an ein unter den Filterelementen liegendes Filtrat-Sammelrohr angeschlossen ist. Durch Anschwemmen eines in einer Flüssigkeit suspendierten Filterhilfsmittels werden die dem Trüberaum des Filterbehälters ausgesetzten Oberflächen der Filterelemente mit einer notwendigen, ablösbaren und periodisch zu erneuernden Filtermembran aus dem Filterhilfsmittel bedeckt. Es ist bekannt, diese Filtermembran in der Weise zu erzeugen, daß in einem mit dem Filterbehälter in Verbindung stehenden gesonderten Aufbereitungsbehälter aus Wasser und eingestreuten losen Faserflocken von Hand eine Fasersuspension vorbereitet wird und daß vor der eigentlichen Filtrierung einer trüben Flüssigkeit so lange diese Fasersuspension gegen die Trübe/seite der Filterelemente gepumpt und klares Wasser von der Filtratseite der Filterelemente abgelassen wird, bis sich durch fortlaufendes Einpumpen der Suspension und allmähliches Abscheiden des Fasermaterials die Filtermembran mit der benötigten Schichtdicke ausgebildet hat. Diese als dynamisch zu bezeichnende Anschwemm-Methode konnte, um insbesondere auf großflächigen Filterelementen eine notwendigerweise möglichst gleichmäßige Faserabscheidung zu erzielen, nur mit einer relativ geringen Faserkonzentration in der fortlaufend eingepumpten Suspension und mit relativ kleiner Strömungsgeschwindigkeit der Suspension ausgeführt werden und war daher für die Praxis zu zeitraubend. Aus diesem Grunde hat man für den Betrieb moderner Anschwemm-Filtriervorrichtungen die Verwendung eines Faserstoffs für die Filtermembranbildung aufgegeben und das Filtrierverfahren auf Kieselgur als einfacher zu handhabendes, wirtschaftliches Filterhilfsmittel umgestellt. Bei der Anwendung von Kieselgur wird zunächst mit Wasser oder filtrierter Flüssigkeit eine dünne Kieselgurschicht an die Filterelemente angeschwemmt und wird nach dieser Voranschwemmung, mit der Filtrierung beginnend, die trübe Flüssigkeit zugeführt, der laufend weitere Kieselgurmengen zugegeben werden. Dadurch reichert sich während der

0022463

Filtration die vorangeschwemmte, zunächst dünne Kieselgurschicht zu einem dickeren Filterkuchen an, der die aus der
trüben Flüssigkeit entfernten Schmutzstoffe enthält. Nach
jeder Filterperiode muß der gesättigte Filterkuchen aus
dem Filterbehälter entfernt werden. Hierzu ist es bekannt,
den Filterkuchen durch ein Gemisch von Druckluft und Wasser,
das von der Filtratraumseite her gegen die Rückseite des
Filterkuchens geleitet wird, von den Filterelementen abzustoßen. Der Kuchen gelangt als dicker Schlamm in den
konischen Behälterboden und wird von dort abgezogen. Nach
einer anderen Methode ist es bekannt, den Filterkuchen
mittels eines auf den Filterelementen angeordneten Rüttlers
durch Vibration abzulösen und zerbröckelt, halb trocken
in den konischen Behälterboden herunterfallen zu lassen. Das
Ablösen und Entfernen des Filterkuchens ist ein wesentlicher
Vorgang beim Anschwemm-Filtrieren und verursacht bei beiden
vorgenannten Methoden beträchtliche Probleme. Das bei den
bekannten Filterbehältern unter den Filterelementen quer
liegende Filtrat-Sammelrohr stellt ein Hindernis dar und
erschwert ein vollständiges Entfernen der Kuchenmasse. Auf
jeden Fall muß nach erfolgter Entfernung des Filterkuchens
eine gründliche Nachreinigung insbesondere der Filterelemente erfolgen. Die feinkörnige Kieselgur hat die
Tendenz, in die Gewebeporen der Filterelemente einzudringen,
was zu Verstopfungen führt     und die gründliche Nachreinigung der Filterelemente nach jeder Filterperiode
erfordert. Außerdem erfordert die Kieselguranschwemmung ein
besonders dichtes Tressengewebe auf der Trübeseite der

0022463

Filterelemente, da sonst die Kieselgurschichtbildung auf den Filterelementen nur sehr langsam oder überhaupt nicht eintritt. Die Verwendung von Kieselgur zur Voranschwemmung hat sich daher verfahrenstechnisch als sehr nachteilig herausgestellt, insbesondere auch weil die gründliche Nachreinigung der Filterelemente einen erheblichen Spülwasserverbrauch erfordert und zeitaufwendig, kostspielig und umständlich ist. Außerdem ist die mit der Nachreinigung verbundene Abwasserverschmutzung nicht mehr vertretbar oder nicht mehr zulässig.

Die Erfindung hat sich die Aufgabe gestellt, die geschilderten Nachteile und Schwierigkeiten der bekannten Anschwemm-Filtriervorrichtungen und der bekannten Verfahrensweisen mit solchen Vorrichtungen zu vermeiden. Vorrichtungsmäßig wird diese Aufgabe in erster Linie durch die im Hauptanspruch gekennzeichnete Ausbildung des Filterbehälters der Anschwemm-Filtriervorrichtung gelöst. Diese Ausbildung des Filterbehälters hat den entscheidenden Vorteil, daß nach Beendigung einer Filtrierperiode alle auf den Filterelementen gebildeten Filterkuchen durch Vibration oder in bevorzugter Weise durch Druckluft-Rückstoß von der Filtratseite der Filterelemente her von den Trübeseiten der Filterelemente abgestoßen werden können und bei geöffneter Bodenklappe unmittelbar und ohne jede Behinderung als geschlossener, nicht zerbröckelter Kuchen nach unten aus dem Filterbehälter herausfallen können. Besonders exakt und sauber ist der Kuchenabwurf ausführbar, wenn die Filter-

0022463

membranen aus einer vorangeschwemmten dünnen Sperrschicht aus einem Fasermaterial und einer während der Trübeflüssigkeitfiltrierung laufend angeschwemmten Kieselgurschicht bestehen. In diesem Fall behalten die Filterkuchen beim Abstoßen von den Filterelementen einen besonders guten Zusammenhalt und hinterlassen sie absolut saubere Filterelementflächen, so daß eine Nachreinigung mit Spülwasser ganz überflüssig ist. Um bei der Anwendung eines Luftdruckes im Filtraraum des Filterbehälters zum Abstoßen der Filterkuchen von den Filterelementen das Ablösen der Filterkuchen zu verbessern und zu vergleichmäßigen, werden gemäß einem vorteilhaften weiteren Ausgestaltungsmerkmal die Filterelemente durch eine mittlere geschlossene Platte in zwei Gewebeschichten unterteilt und die Gewebeschichten ihrerseits durch mehrere eingebettete waagerechte Trennleisten und ggf. noch durch eine eingebettete mittlere senkrechte Trennleiste in mehrere Teilfelder unterteilt, die jeweils an den Randflächen der Filterelemente offen sind und mit dem Filtraraum in Verbindung stehen.

Es wurde gefunden, daß eine gleichzeitige Ablösung der gesamten Filterkuchenflächen und ein Herausfallen des Filterkuchens aus der geöffneten Bodenklappe als ganzes Stück bei Anwendung der Abstoßmethode mit Druckluft besonders zuverlässig zu erzielen ist, wenn auf der Filtratseite der Filterelemente ein genügend hohes Druckpolster so schnell aufgebaut und kurzzeitig gehalten wird, daß es insgesamt und als Impuls wirksam wird, bevor die

- 6 -

0022463

durch Masseträgheit und Adhäsion etwas verzögerte Ablösung der Kuchen von den Filterelementen einsetzt. Es wurde weiter festgestellt, daß das Druckpolster nur eine Druckhöhe von 0,1 bis 0,2 bar haben muß, um den gleichzeitigen Abwurf aller Filterkuchen von allen Filterelementen zu bewirken, unddaß dieser Druck ausreicht, wenn es gelingt, ihn innerhalb von etwa o,03 bis 0,05 Sekunden aufzubauen. Zu diesem Zweck ist gemäß einer weiteren vorteilhaften Ausgestaltung der Filtratraum des Filterbehälters durch eine absperrbare Druckluftleitung an einen Druckluftvorratsbehälter angeschlossen, dessen Luftvolumen und Luftdruck so groß bemessen sind, daß bei stoßartiger Entspannung der Druckluft in den Filtratraum bei leerem Filterbehälter und geöffneter Bodenklappe ein zum Abstoßen der Filterkuchen von den Filterelementen in die Trüberäume ausreichender Luftdruck im Filtratraum und in den Gewebeschichten der Filterelemente eintritt, vorzugsweise ein Luftdruck von 0,1 bis 0,2 bar. Hierbei kann in weiterer Ausgestaltung das Volumen des Druckluftvorratsbehälters etwa 10% des Volumens des Filtratraumes und der Luftdruck im Druckluftvorratsbehälter vor der Entspannung der Druckluft in den Filtratraum etwa 10 bar betragen und kann die Druckluftleitung ein mit einer Öffnungszeit von etwa 0,02 bis 0,03 Sekunden ausgebildetes Ventil aufweisen.

Zur Herstellung einer Fasersuspension für die Voranschwemmung einer dünnen Faserschicht auf der Trübeseite der Filterelemente ist gemäß einem weiteren vorteilhaften Ausgestaltungsmerkmal der Trüberaum des Filterbehälters durch eine Leitung mit einem Aufbereitungsbehälter verbunden, der eine Papiervorratsrolle und eine Rühreinrichtung mit messerartig scharfen Rührflügeln zum Zerfasern von eingeleiteter Papierbahn besitzt. Hierdurch wird das umständliche manuelle Einrühren von losen Faserflocken in Wasser vermieden und kann durch abschnittsweises Einziehen der Papierbahn in den Aufbereitungsbehälter und Zerfasern der eingezogenen Papierbahn die Vorbereitung einer Fasersuspension für die Voranschwemmung einer dünnen Faserschicht mechanisiert und in Verbindung mit dem Filtrierprozess und dem Filtermembranwechsel automatisiert werden.

Die Ausführung eines Filtrierverfahrens mit der erfindungsgemäßen Anschwemm-Filtriervorrichtung besteht erfindungsgemäß darin, daß der Trüberaum des Filterbehälters mit einer aus sauberer Flüssigkeit gebildeten Fasersuspension gefüllt wird, die im wesentlichen die gesamte für die Anschwemmung einer dünnen Sperrschicht aus dem Fasermaterial erforderliche Fasermenge enthält, wobei sich bei geschlossener Filtratleitung und Entlüftung des Filterbehälters der Filtratraum mit sauberer Flüssigkeit füllt, und daß nach vollständiger Befüllung des Trüberaumes mit der Fasersuspension die Filtratleitung geöffnet und die Flüssigkeit rasch durch den Filtratraum abgelassen wird. Die gesamte Fasermenge wird also bei einer gewissen Strömungsruhe im Trüberaum auf die Filterlemente abgeschieden. Mit dieser

0022463

als statisch zu bezeichnenden Anschwemm-Methode wird eine sehr gleichmäßige Anschwemmung des Fasermaterials auf die gesamte Fläche der Filterelemente erzielt. Die Fasersuspension kann eine hohe Faserkonzentration enthalten, und da das Wasser der Fasersuspension sehr rasch aus dem Filterbehälter abgelassen wird, kann die Voranschwemmung der dünnen Sperrschicht aus dem Fasermaterial in sehr kurzer Zeit erfolgen und kann dementsprechend sehr rasch mit einer einwandfrei sauberen Filtrierung einer trüben Flüssigkeit mit weiterhin zugesetzter Kieselgur begonnen werden. Um die vorangeschwemmte Sperrschicht aus Fasermaterial nachträglich noch zu verdichten und damit die Haftung der Filtermembran an den Filterelementen zu verbessern, kann nach oder auch schon während des raschen Ablassens der Flüssigkeit der Fasersuspension aus dem Filtratraum des Filterbehälters klare Flüssigkeit durch den Trüberaum und den Filtratraum im Kreislauf umgepumpt werden. Die Dicke der vorangeschwemmten Sperrschicht aus Fasermaterial kann durch Variierung der Konzentration der Fasersuspension bestimmt werden. Diese statische Anschwemm-Methode ist auch bei großen Filterelementflächen von beispielsweise 10 bis 20 $m^2$ innerhalb von etwa 2 bis 3 Minuten durchführbar. Um die Herstellung der vorangeschwemmten dünnen Sperrschicht aus Fasermaterial ohne manuelle Eingriffe betriebssicher in den Filtrationsbetrieb einzufügen, wird die Fasersuspension nicht mit umständlich zu handhabenden losen Faserflocken aufbereitet, sondern wird vorteilhafterweise als Fasermaterial ein geeignetes Filterpapier angewendet, das als große Papierrolle zur Verfügung steht und für eine große Anzahl von Filtermembranwechseln ausreicht. Zwischen zwei Filtermembranwechseln kann dann im Rahmen einer automatischen Steuerung der gesamten Filtriervorrichtung und des Filtrationsbetriebes durch Einleiten einer vorbestimmten Länge der Papierbahn in einen mit klarer Flüssigkeit gefüllten Aufbereitungsbehälter und durch Zerfasern der eingeleiteten Papierbahnlänge mittels scharfer Rührwerkflügel die für einen nächsten Filtermembranwechsel benötigte Fasersuspension hergestellt und in Bereitschaft gehalten werden.

Die vor der Filtration einer trüben Flüssigkeit mit fortlaufend hinzugefügter Kieselgur vorgenommene Anschwemmung einer dünnen Sperrschicht aus Fasermaterial verhindert eine Berührung der Kieselgur mit dem Grundgewebe der Filterelemente, vermeidet dadurch die Gefahr einer Verstopfung der Filterelemente und gewährleistet ein sauberes Ablösen der Filterkuchen von den Filterelementen. Das Ablösen der Filterkuchen kann durch Vibration oder durch Druckluft erfolgen. Bei der Druckluftablösung kann nach Ablassen der Restmengen an trüber Flüssigkeit und an filtrierter Flüssigkeit der Filterbehälter unter Luftdruck gesetzt werden und dann die den Trüberaum nach unten vollständig freigebende Bodenklappe plötzlich geöffnet werden, wodurch das vom Filtratraum in den Trüberaum sich entspannende Druckpolster die Filterkuchen von den Filterlementen abdrückt. Die abgedrückten Filterkuchen, die bei einander gegenüberstehenden Trübeseiten der Filterelemente gegeneinander prallen, fallen aus den Trüberäumen durch die vollständig geöffnete Bodenöffnung aus dem Filterbehälter nach unten heraus. Vorteilhafterweise erfolgt in einer weiteren Ausgestaltung des erfindungsgemäßen Filtrierverfahrens die Druckluftablösung in der Weise, daß zum Abstoßen der Filterkuchen von den Filterelementen die Bodenklappe des Filterbehälters geöffnet wird und daß durch stoßartiges Einleiten von Druckluft in den Filtratraum während einer Zeitdauer von etwa o,o3 bis o,o5 Sekunden im Filtratraum ein Luftüberdruck von o,1 bis o,2 bar erzeugt wird. Dieses kurzzeitige und relativ geringe Luftpolster reicht zum Abstoßen der Filterkuchen aus und vermeidet, daß im Trüberaum durch unnötiges Nachströmen von Luft aus dem Filtratraum eine erhöhte Luftströmung herrscht und dadurch die abgelösten und herunter-fallenden Filterkuchen zerbröckelt werden. Vorteilhafter-weise wird die in den Trüberaum sich entspannende Luft nicht nur durch die geöffnete Bodenklappe abgelassen, sondern auch noch nach oben durch ein beispielsweise bei leerem Filterbehälter selbsttätig sich öffnendes Entspannungsventil, wodurch die Abströmgeschwindigkeit der Luft aus dem Trüberaum noch weiter vermindert wird.

Anhand der Zeichnung wird die erfindungsgemäße Anschwemm-Filtriervorrichtung und das erfindungsgemäße Verfahren mit einer solchen Filtriervorrichtung näher beschrieben. In der Zeichnung zeigen

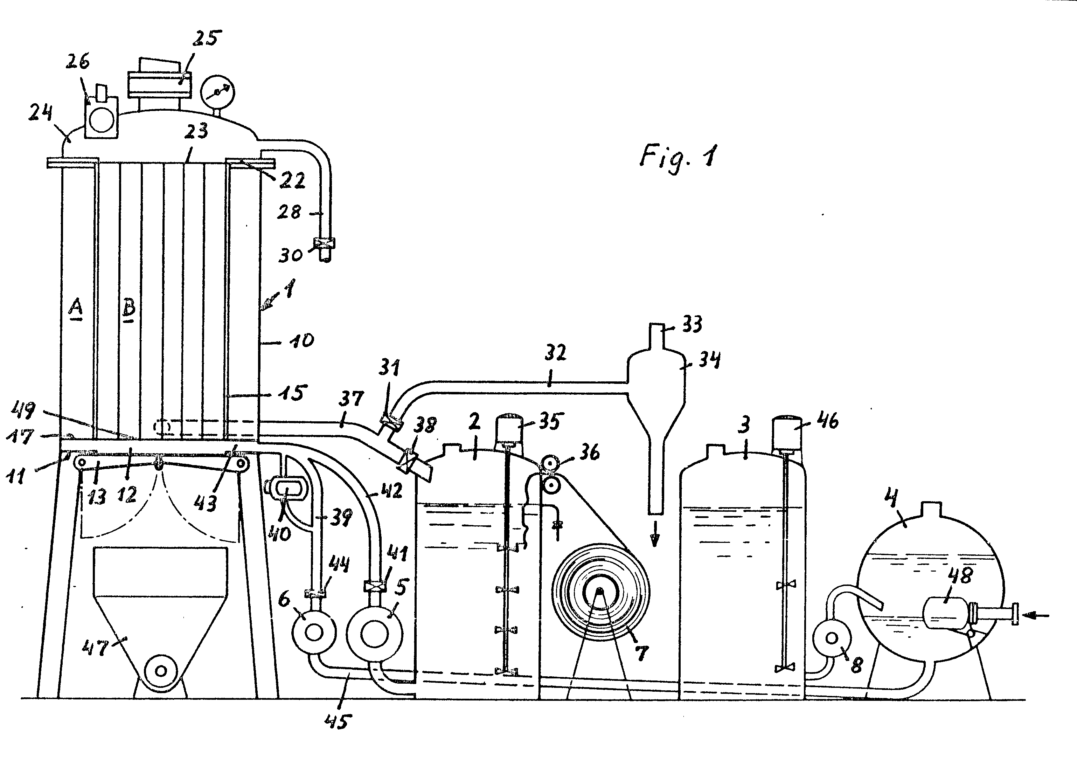

Fig. 1 die gesamte Anschwemm-Filtriervorrichtung in schematisierter Darstellung;

Fig. 2 einen horizontalen Schnitt durch einen Teil des Filterelementpaketes, das in dem Filterbehälter der Vorrichtung der Fig. 1 enthalten ist;

Fig. 3 einen senkrechten Schnitt durch ein Filterelement der Fig. 2;

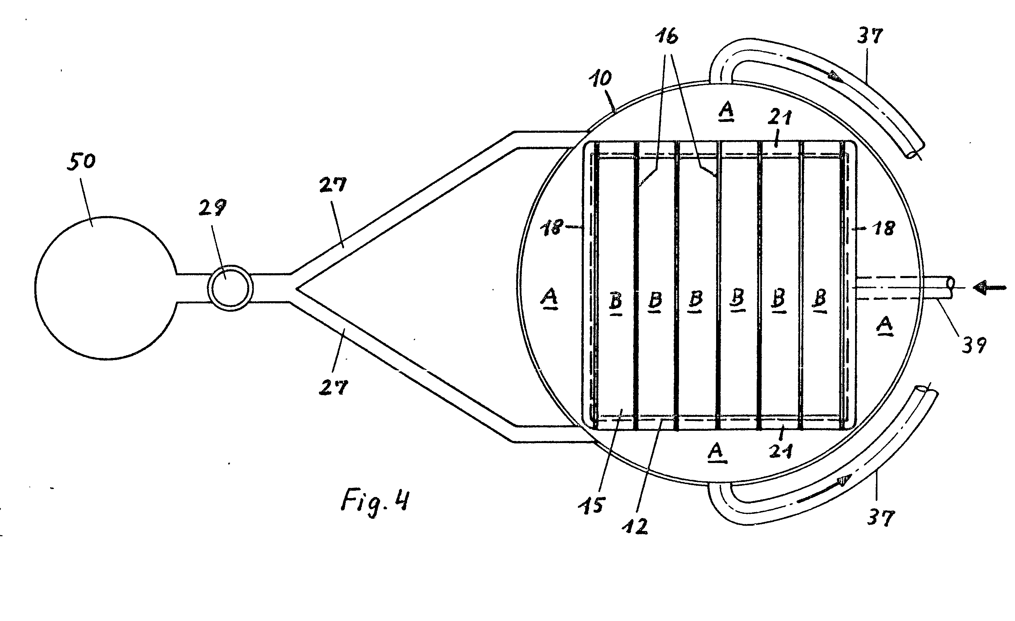

Fig. 4 den Filterbehälter der Filtriervorrichtung der Fig. 1 im horizontalen Schnitt mit schematisiert dargestellten angeschlossenen Drucklufteinrichtungen für die Filterkuchenablösung.

Die Anschwemm-Filtriervorrichtung enthält im wesentlichen den eigentlichen Anschwemmfilter 1 mit einem unter ihm angeordneten Filterkuchen-Auffangbehälter 47, einen Aufbereitungsbehälter 2 für die Herstellung einer Fasersuspension, einen Kieselgurbehälter 3 und einen Pufferbehälter 4 für die trübe Flüssigkeit. Von dem Aufbereitungsbehälter 2 führt eine Suspensionsleitung 42 mit einer Anschwemmpumpe 5 und einem Anschwemmventil 41 zu den Trüberäumen B des Anschwemmfilters 1. Von den Filtraträumen A des Anschwemmfilters 1 führt eine Filtratleitung 37 über ein Rücklaufventil 38 zum Aufbereitungsbehälter 2 zurück. In den Pufferbehälter 4 fließt die zu filtrierende trübe Flüssigkeit über ein Schwimmerventil 48 ein. In dem Kieselgurbehälter 3 wird mittels eines Rührwerks 46 eine Kieselgursuspension aufbereitet, die mittels einer Dosierpumpe 8 der zu filtrierenden trüben Flüssigkeit im Pufferbehälter 4 zugesetzt wird. Von dem Pufferbehälter 4 führt eine Leitung 45 zu einer Betriebspumpe 6, von der eine Trübeleitung 39 mit einem durch einen Schwimmerschalter 40 betätigbaren Trübeventil 44 ebenfalls über eine verteilende Vorkammer 43 zu den Trüberäumen B des Anschwemmfilters 1 führt. Zum Ableiten der filtrierten Flüssigkeit ist an die Filtratleitung 37 vor dem Rücklaufventil 38 eine Leitung 32 mit einem Filtratventil 31 angeschlossen, die zu einem Abscheider 34 führt. Aus dem Abscheider 34 läuft die filtrierte Flüssigkeit nach unten in nicht näher dargestellte Sammelbehälter ab. Nach oben hat der Abscheider 34 ein Luft-Abzugsrohr 33.

Der Anschwemmfilter 1 besteht aus einem senkrechten zylindrischen Filterbehälter 10, der oben durch eine abnehmbare Behälterhaube 24 verschlossen ist. An der Behälterhaube 24 befinden sich ein Schwimmerventil 26, mit dem der Filterbehälter 10 beim Füllen mit Flüssigkeit entlüftet wird, und ein Entspannungsventil 25, das bei der Filterkuchenablösung betätigt wird. An den Filterbehälter 10, und zwar an dessen Trüberäume B, ist ein Druckluftrohr 28 mit einem Druckluftventil 30 angeschlossen.

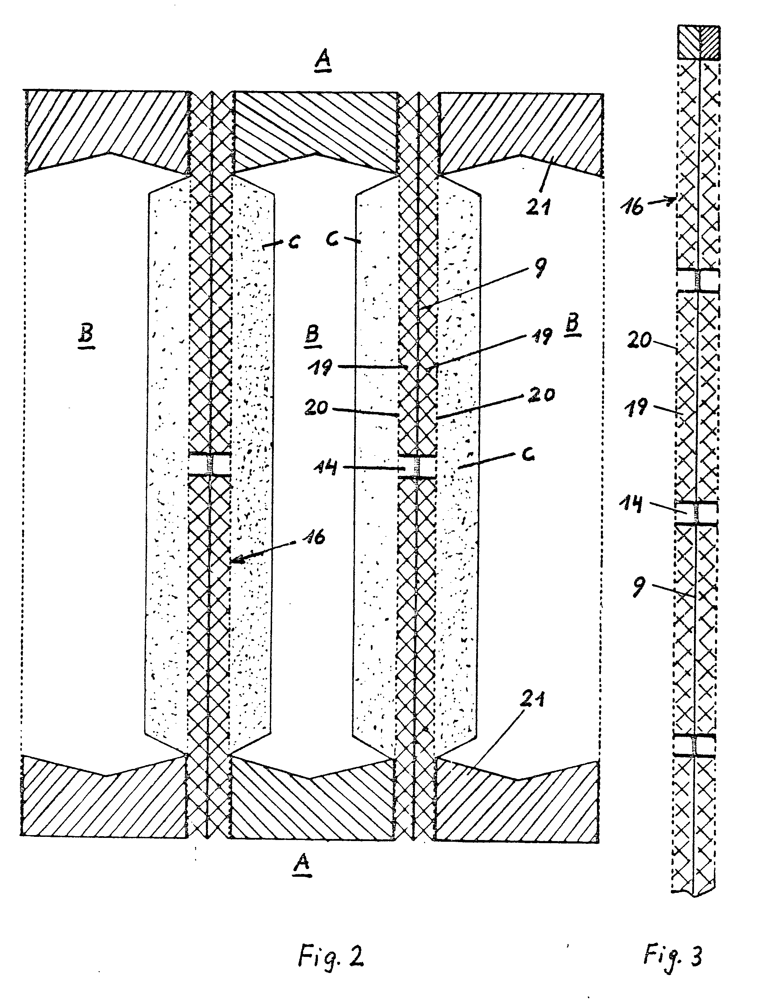

In dem Filterbehälter 10 ist ein Filterelementpaket 15 angeordnet, das aus mehreren senkrechten und planparallelen plattenförmigen Filterelementen 16 besteht, die so miteinander vereinigt sind, daß das Filterelementpaket als Ganzes in den Filterbehälter 10 eingesetzt bzw. aus ihm herausgenommen werden kann. Die Filterelemente 16 bilden zwischen sich die Trüberäume B, die an der Oberseite 23 des Filterelementpaketes offen sind und ebenso an der Unterseite 49 des Filterelementpaketes mit gesamtem Querschnitt zum Behälterboden 11 hin offen sind. Am oberen und am unteren Rand ist das Filterelementpaket 15 durch einen abdichtend anliegenden Zwischendeckel 22 und Zwischenboden 17 dicht mit dem Filterbehälter 10 verbunden. Zwischen dem Zwischendeckel 22 und dem Zwischenboden 17 liegt der Filtratraum A, der die vier senkrechten Seiten des Filterelementpaketes umgibt und von den mit Trübeflüssigkeit füllbaren Behälterräumen oberhalb der Oberseite 23 und unterhalb der Unterseite 49 des Filterelementpaketes 15 abgetrennt ist. An zwei gegenüberliegenden Paketseiten ist das Filterelementpaket 15 durch Endplatten 18 verschlossen. An den beiden anderen senkrechten Paketseiten sind die Trüberäume B durch Distanzleisten 21 dicht verschlossen, die zwischen den senkrechten Rändern der Filterelemente 16 angeordnet sind. Die Filterelemente 16 bestehen aus einem Metallgewebe 19 und sind an ihren oberen und unteren waagerechten Randflächen, also an der Oberseite 23 und an der Unterseite 49 des Filterelementpaketes, dicht verschlossen, wie Fig. 3 zeigt. An den zwischen den Distanzleisten 21 liegenden senkrechten Randflächen sind die Filterelemente 16 zu den Filtraträumen A hin offen. Der unter dem Filterelementpaket 16 liegende, flach ausgebildete Behälterboden 11 besitzt eine quadratische Bodenöffnung 12, deren Querschnitt dem Gesamtquerschnitt des Filterelementpaketes 15 entspricht und die durch eine entsprechend große Bodenklappe 13 dicht verschließbar ist. Durch Öffnen der

Bodenklappe 13 wird daher der gesamte Querschnitt der Trüberäume B nach unten freigelegt.

Während eines Filtriervorganges bilden sich in den Trüberäumen B auf den Trübeseiten der Filterelemente 16 Filterkuchen C aus angeschwemmtem Filterhilfsmittel und abfiltrierten Schmutzstoffen (Fig. 2). Diese Filterkuchen C sind nach Beendigung des Filtervorganges von den Filterelementen 16 beispielsweise durch eine Beaufschlagung mit Druckluft von der Filtratseite der Filterelemente her abzulösen bzw. abzudrücken, so daß die abgelösten Filterkuchen C in den Trüberäumen B durch die geöffnete Bodenklappe 13 in den Auffangbehälter 47 herunterfallen können. Zum Ablösen mittels Druckluft sind in bevorzugter Weise die Filtraträume A über Druckluftrohre 27 und ein Druckluftventil 29 an einen Druckluftvorratsbehälter 50 angeschlossen. Der Druckluftvorratsbehälter kann beispielsweise ein Volumen haben, das etwa 10% des Volumens der Filtraträume A beträgt, und mit einem Luftdruck von etwa 10 bar aufgeladen sein. Das Druckluftventil 29 ist vorzugsweise als pneumatisch gesteuertes Ventil mit einer sehr kurzen Öffnungszeit von o,o2 bis o,o3 Sekunden ausgebildet. Durch Öffnen des Druckluftventils 29 während dieser kurzen Öffnungszeit wird augenblicklich der Druckluftvorratsbehälter entleert und in den Filtraträumen A ein Druckpolster von etwa o,1 bis o,2 bar aufgebaut. Dieser niedrige Druck des Druckpolsters reicht zum Abdrücken der Filterkuchen C von den Filterelementen 16 aus, und der kurzzeitige impulsartige Aufbau des Druckpolsters und die ebenso kurz-

zeitige Entspannung des Druckpolsters in die Trüberäume B vermeidet ein größeres Nachströmen von Luft und verhindert dadurch ein Zerreißen oder Verwirbeln der abgedrückten Filterkuchen. Die in die Trüberäume B entspannte Luft entweicht nach unten durch die geöffnete Bodenklappe 13 und vorzugsweise auch noch nach oben durch das geöffnete Entspannungsventil 25. Um das Abdrücken der Filterkuchen C als ganzes zu verbessern, enthalten die Filterelemente 16 etwa in der Mitte ihrer Schichtdicke eine bis zu den senkrechten Randflächen reichende geschlossene Platte 9, die das Filterelement in zwei Gewebeschichten unterteilt (Fig. 2 und 3). Diese beiden Gewebeschichten sind jeweils durch mehrere eingebettete waagerechte Trennleisten 14 und ggf. noch durch eine eingebettete mittlere senkrechte Trennleiste 14 in mehrere Teilfelder unterteilt, die an den Randflächen des Filterelementes zu den Filtraträumen A hin offen sind. Hierdurch wird die Entspannung des Druckpolsters auf die Teilfelder der Gewebeschichten aufgeteilt und ein möglichst gleichmäßiges und gleichzeitiges Abdrücken der Filterkuchen von der Trübeseite der Filterelemente 16 erreicht. Zweckmäßigerweise ist das grobmaschigere Grundgewebe 19 der Filterelemente 16 mit einem feinmaschigeren Tressengewebe 20 bedeckt. Um ein Eindringen der bei einer Filtrationsperiode als Filterhilfsmittel angewendeten Kieselgur in die Poren der Filterelemente zu verhindern und um das Ablösen der Filterkuchen C von den Filterelementen noch weiter zu verbessern, wird vorteilhafterweise vor dem Einleiten der zu filtrierenden trüben Flüssigkeit mit zugesetzter Kieselgur eine dünne Sperrschicht aus einem Fasermaterial auf den Filterelementen 16 gebildet, und zwar durch Anschwemmen einer in dem Aufbereitungsbehälter 2 vorbereiteten Fasersuspension. Der Aufbereitungsbehälter 2 besitzt eine Papiervorratsrolle 7 aus einem geeigneten Filterpapier und eine Einzugwalze 36, mit der ein vorbestimmter Längenabschnitt der Papierbahn in den mit Wasser oder klarer Flüssigkeit gefüllten Aufbereitungsbehälter 2 eingeführt wird. Ferner besitzt der Aufbereitungsbehälter 2 ein Rührwerk 35 mit messerartig scharfen Rührflügeln, mit denen die eingeführte Papierbahn zerfasert und mit dem Wasser vermischt wird. Vorzugsweise entspricht das Volumen des Aufbereitungsbehälters 2 bzw. der in ihm vorbereiteten Fasersuspension dem Volumen der Trüberäume B des Filterbehälters 10 und wird so viel Fasermaterial in Form der Papierbahn in den Aufbereitungsbehälter 2 eingeführt, wie für die Bildung der vorangeschwemmten dünnen Sperrschichten auf allen Filterelementen 16 benötigt wird.

Der mit einem nicht näher dargestellten, geeigneten Steuerwerk automatisch steuerbare Betrieb der dargestellten Anschwemm-Filtriervorrichtung bzw. das erfindungsgemäße Filtrierverfahren mit dieser Vorrichtung läuft folgendermaßen ab.

Bei geschlossenem Filtratventil 31 und geschlossenem Rücklaufventil 38 wird das Anschwemmventil 41 geöffnet und die Anschwemmpumpe 5 eingeschaltet. Die vorbereitete Fasersuspension wird aus dem Aufbereitungsbehälter 2 durch die

0022463

(A) vom übrigen mit der Trübeleitung in Verbindung stehenden Behälterinnenraum abgetrennt ist,

b) die planparallel mit einem Abstand voneinander angeordneten senkrechten Filterelemente (16) des Paketes bilden mit ihren Zwischenräumen Trüberäume (B), die nach oben und nach unten offen sind und durch senkrechte Distanzleisten (21) zwischen den senkrechten Rändern der Filterelemente gegen den Filtratraum dicht verschlossen sind,

c) die oberen und unteren waagerechten Randflächen der Filterelemente (16) sind dicht verschlossen, während die senkrechten Randflächen der Filterelemente zwischen den Distanzleisten zum Filtratraum hin offen sind,

d) unter dem Filterelementpaket besitzt der Filterbehälter einen flachen Behälterboden (11) mit einer quadratischen Bodenöffnung (12), deren Querschnitt dem Gesamtquerschnitt des Filterelementpaketes (15) entspricht und die durch eine entsprechend große Bodenklappe (13) dicht verschließbar ist.

2. Vorrichtung nach Anspruch 1, dadurch gekennzeichnet, daß die die Filterelemente (16) bedeckende Filtermembran aus einer vor der Trübeflüssigkeitfiltrierung angeschwemmten dünnen Sperrschicht aus einem Fasermaterial und einer während der Trübeflüssigkeitfiltrierung laufend angeschwemmten Kieselgurschicht besteht.

3. Vorrichtung nach Anspruch 1, dadurch gekennzeichnet, daß die Filterelemente (16) etwa in der Mitte ihrer Schichtdicke eine

0022463

bis zu den senkrechten Randflächen reichende geschlossene Platte (9) enthalten, wobei vorzugsweise die beiderseits der Platte liegenden Gewebeschichten (19) durch mehrere waagerechte Trennleisten (14) und gegebenenfalls eine mittlere senkrechte Trennleiste (14) in mehrere an den Randflächen des Filterelementes offene Teilfelder unterteilt sind.

4. Vorrichtung nach Anspruch 1, dadurch gekennzeichnet, daß der Filtratraum (A) des Filterbehälters durch eine absperrbare Druckluftleitung (27) an einen Druckluftvorratsbehälter (50) angeschlossen ist, dessen Luftvolumen und Luftdruck so groß bemessen sind, daß bei stoßartiger Entspannung der Druckluft in den Filtratraum bei leerem Filterbehälter und geöffneter Bodenklappe ein zum Abstoßen der Filterkuchen (C) von den Filterelementen (16) in die Trüberäume (B) ausreichender Luftdruck im Filtratraum (A) und in den Gewebeschichten (19) der Filterelemente entsteht, vorzugsweise ein Luftdruck von 0,1 bis 0,2 bar.

5. Vorrichtung nach Anspruch 4, dadurch gekennzeichnet, daß das Volumen des Druckluftvorratsbehälters (50) etwa 10% des Volumens des Filtratraumes (A) und der Luftdruck im Druckluftvorratsbehälter vor der Entspannung der Druckluft in den Filtratraum etwa 10 bar beträgt und daß die Druckluftleitung (27) ein mit einer Öffnungszeit von etwa 0,02 bis 0,03 Sekunden ausgebildetes Ventil (29) aufweist.

6. Vorrichtung nach Anspruch 1, dadurch gekennzeichnet, daß der Trüberaum (B) des Filterbehälters (10) durch eine Leitung mit einem Aufbereitungsbehälter (2) für eine Fasersuspension in Verbindung steht, der eine Papiervorratsrolle (7) und eine Rühreinrichtung (35) mit messerartig scharfen Rührflügeln zum Zerfasern von eingeleiteter Papierbahn besitzt.

7. Filtrierverfahren mit einer Filtriervorrichtung nach Anspruch 1 bis 6, dadurch gekennzeichnet, daß der Trüberaum des Filtrierbehälters mit einer aus sauberer Flüssigkeit und einem Fasermaterial gebildeten Fasersuspension gefüllt wird, die im wesentlichen die gesamte für die Anschwemmung einer dünnen Sperrschicht aus dem Fasermaterial erforderliche Fasermenge enthält, wobei sich bei geschlossener Filtratleitung der Filtratraum mit sauberer Flüssigkeit füllt, daß nach vollständiger Befüllung des Trüberaumes mit der Fasersuspension die Filtratleitung geöffnet und die Flüssigkeit rasch durch den Filtratraum abgelassen wird, wobei nach oder während der Entleerung vorzugsweise das an die Filterelemente angeschwemmte Fasermaterial durch Umpumpen von klarer Flüssigkeit durch Trüberaum und Filtratraum verdichtet wird, und daß nach Bildung der Sperrschicht die Einleitung von Trübeflüssigkeit mit zugesetzter Kieselgur in den Trüberaum begonnen wird.

8. Verfahren nach Anspruch 7, dadurch gekennzeichnet, daß die Fasersuspension durch Einleiten einer vorbestimmten Länge und Menge einer Papierbahn in einen mit klarer Flüssigkeit gefüllten Aufbereitungsbehälter und durch Zerfasern der einge-

leiteten Papierbahnlänge mittels scharfer Rührwerksflügel hergestellt wird.

9. Verfahren nach Anspruch 7, dadurch gekennzeichnet, daß zum Abstoßen der Filterkuchen von den Filterelementen die Bodenklappe des Filterbehälters geöffnet wird und daß durch stoßartiges Einleiten von Druckluft in den Filtratraum während einer Zeitdauer von etwa 0,03 bis 0,05 Sekunden im Filtratraum ein Luftüberdruck von 0,1 bis 0,2 bar erzeugt wird, wobei die durch die Filterelemente in den Trüberaum sich entspannende Luft vorzugsweise zusätzlich zu der Ableitung aus dem Trüberaum nach unten durch die geöffnete Bodenklappe auch nach oben durch ein bei leerem Filterbehälter geöffnetes Entspannungsventil abgelassen wird.

Fig. 1

1/3

0022463

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 763 971 (M. WILDERMAN) <br> * Seiten 2, 4; Fig. 1 bis 5 * <br> -- | 1-4, 7,9 |
| | DE - C - 870 837 (ENZINGER-UNION-WERKE) <br> * Fig. 2 * <br> -- | 3 |
| | DE - C - 965 850 (E. A. ZDANSKY) <br> * Anspruch 1 * <br> -- | 7 |
| | DE - C - 969 665 (LURGI) <br> * Anspruch * <br> -- | 2 |
| | DE - C - 1 021 828 (A. ZIEMANN) <br> * Fig. 1 bis 3 * <br> -- | 3 |
| | DE - B - 1 049 362 (PHILIPP HILGE) <br> * Fig. 3 * <br> -- | 3 |
| | DE - A - 1 761 796 (HOELSCHER) <br> * Anspruch 1 * <br> -- | 9 |
| | DE - A - 1 935 994 (PASSAVANT-WERKE) <br> * Anspruch 1 * <br> -- | 7 |
| | DE - A - 2 001 594 (H. EICKENMEYER) <br> * Anspruch 10 * <br> -- | 1,9 |
| | DE - A - 2 015 981 (BRASCO) <br> * Fig. 1 * <br> -- ./.. | 1 |

**KLASSIFIKATION DER ANMELDUNG (Int.Cl.3)**

B 01 D 37/02

**RECHERCHIERTE SACHGEBIETE (Int. Cl.3)**

B 01 D 25/06
B 01 D 37/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 20-10-1980 | KÜHN |

EPA form 1503.1   06.78